# EUROPEAN PATENT APPLICATION

(11) **EP 4 379 207 A1**
(43) Date of publication of application: **05.06.2024**
(21) Application number: 22211161.9
(22) Date of filing: 02.12.2022
(51) Int. Cl.: F03D 1/06

(54) **BASE ELEMENTS AND EDGE ELEMENTS FOR WIND TURBINE BLADE SECTIONS**

(71) Applicant: LM Wind Power A/S, 6000 Kolding (DK)
(72) Inventor: ROGERS, Damien, 1703 DH Heerhugowaard (NL); TODD, Paul, Hampshire, SO53 4SE (GB)
(74) Representative: de Rooij, Mathieu Julien

(57) **Abstract**

The present disclosure relates to a wind turbine blade section comprising a base and an edge element. The base is made of fiber reinforced composite material and comprises a suction surface, a pressure surface and at least one outer surface portion between the suction surface and the pressure surface and comprising a first base positioning feature. The edge element comprises an inner surface including a first edge positioning feature. The first edge positioning feature is configured to engage with the first base positioning feature and the edge element is configured to be joined to the suction surface and/or to the pressure surface of the base.

## Description

### FIELD

The present disclosure relates to wind turbine blades and methods for manufacturing wind turbine blades and sections of wind turbine blades. The present disclosure further relates to edge elements for attaching to a base element to manufacture a section of a wind turbine blade.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

Wind turbine blades, and particularly the leading edge areas of the blades may erode due to impact e.g. of rain, hail and particles on the blades. Also, wind turbines are increasingly being installed in geographical locations with harsh environmental conditions, particularly offshore. Dirty and/or eroded blades have a more irregular surface than clean blades which can have a significant impact on the air flow around the blades. Roughened blades generally produce less lift and more drag for a given wind flow, which reduces the power produced by the wind turbine. Roughened blades may cause non-negligible reductions of annual energy production (AEP).

Known ways to protect the leading edge from erosion include covering the leading edge with one or more leading edge protectors (LEPs), e.g. with tape or a C-shaped plate. The LEP may be joined to the leading edge by an adhesive. Accurate placement of leading edge protectors is crucial in order to maximize energy production of the wind turbine.

In order to extract more energy from the wind, the size of the rotor diameter has increased over the years by increasing the dimensions of the wind turbine blades. One of the manufacturing challenges of increasing the dimensions of the wind turbine blades is to achieve the same manufacturing tolerances of leading edge protectors.

Another constraint when designing wind turbine blades is that the airflow passing over the aerodynamic profile of a wind turbine blade may generate noise. Wind turbine blades may comprise trailing edge noise reduction elements which may be joined to the trailing edge of a blade with e.g. an adhesive.

In order for wind turbine blades to perform according to their design specifications, and exhibit the intended aerodynamic behavior, elements such as leading edge protectors, trailing edge add-ons and others are to be placed in the correct location on the blade. Accurately positioning the different edge components in a specific position may be achieved with visual references or with repeated iterations of measurement and adjustment until the module is within positional specification. However, these known processes are cumbersome and require a significant amount of time, particularly for larger blades.

The present disclosure provides examples of devices and methods which enable improvements in the manufacturing processes of wind turbine blades.

### SUMMARY

In an aspect of the present disclosure, a wind turbine blade section comprising a base and an edge element is provided. The base is made of fiber reinforced composite material, and comprises a suction surface, a pressure surface, and at least one outer surface portion between the suction surface and the pressure surface. The outer surface portion comprises a first base positioning feature and the edge element comprises an inner surface including a first edge positioning feature. The first edge positioning feature is configured to engage with the first base positioning feature and the edge element is configured to be joined to the suction surface and/or to the pressure surface of the base.

According to this aspect, an accurate and precise positioning of an edge element with respect to the base for a wind turbine blade section may be achieved. Deviations of the aerodynamic properties of a wind turbine blade section with respect to the original intention may be reduced. The assembly of the base with the edge element may be ensured in an efficient and less time-consuming assembling operation.

In a further aspect of the present disclosure, a base for a wind turbine blade section configured to be coupled to an edge element is provided. The base is made of fiber reinforced composite material, and comprises a suction surface, a pressure surface and at least one outer surface portion which is between the suction surface and the pressure surface. The outer surface portion comprises a first base positioning feature which is configured to engage with a first edge positioning feature on the edge element.

In another aspect of the disclosure, an edge element configured to be coupled to a base of a wind turbine blade section, the base having a suction surface, a pressure surface and a first base positioning feature is provided. The edge element comprises an inner surface including a first edge positioning feature configured to engage with the first base positioning feature. The edge element is configured to be joined to the suction surface and/or to the pressure surface of the base.

In yet a further aspect of the disclosure, a method for mounting an edge positioning feature on an edge element for a wind turbine blade section is provided. The method comprises providing a mold including one or more predefined coupling points, and placing an edge element for a wind turbine blade section in the mold, an outer portion of the edge element being in contact with the mold. The method further comprises providing an edge positioning feature placement tool configured to carry an edge positioning feature and attaching the placement tool to the mold at the predefined coupling points such that the edge positioning feature is brought into contact with the edge element.

In a further aspect, a method for assembling a wind turbine blade section is provided. The method comprises providing a base of the wind turbine blade section, the base comprising a first base positioning feature. The method further comprises providing an edge element comprising a first edge positioning feature configured to engage with the first base positioning feature. The method further comprises positioning the edge element with respect to the base by engaging the first edge positioning feature with the first base positioning feature. The method further comprises attaching the edge element to the base.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 3A schematically illustrates an example of a base and an edge element for a wind turbine blade section;
Figure 3B schematically illustrates the edge element in the example of Figure 3A joined to the base of Figure 3A.
Figures 4A and 4B schematically illustrate examples of base positioning features and edge positioning features which may be used in examples of the present disclosure;
Figure 5 schematically illustrates an example of an edge element being mounted on a base of a wind turbine blade section;
Figure 6 shows a flow chart of a method for mounting an edge positioning feature on an edge element for a wind turbine blade section;
Figure 7 schematically illustrates an example of an edge positioning feature being mounted on an edge element;
Figure 8 shows a flow chart of a method for mounting a base positioning feature on a base for a wind turbine blade section;
Figure 9 schematically illustrates an example of a base positioning feature being mounted on a base for a wind turbine blade section;
Figure 10 schematically illustrates an example of a base positioning feature placement tool; and

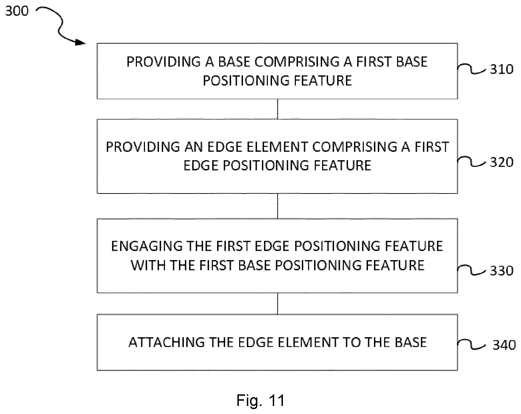

Figure 11 shows a flow chart of a method for assembling a wind turbine blade section.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

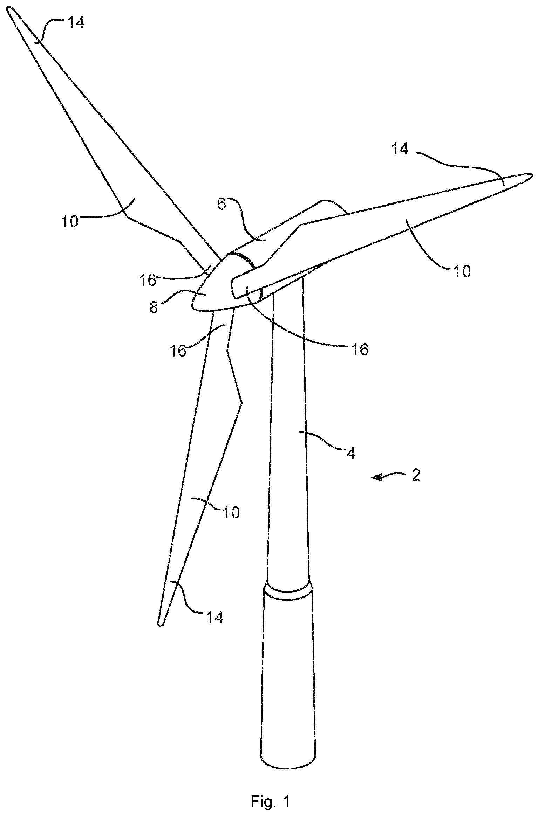

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

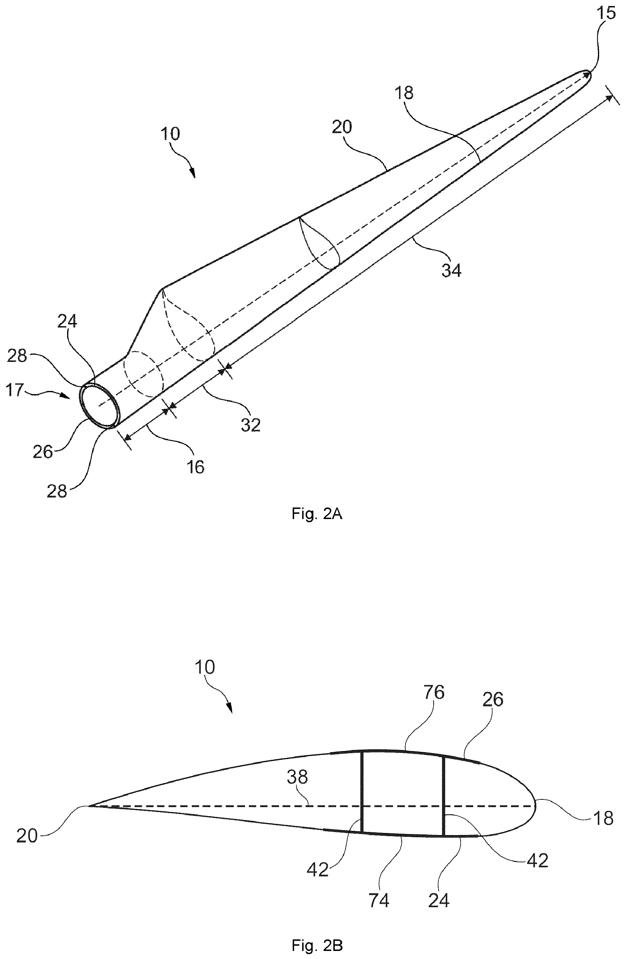

Fig. 2A shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

Figure 2B is a schematic diagram illustrating a cross-sectional view of an exemplary wind turbine blade 10, e.g. of the airfoil region 34 of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

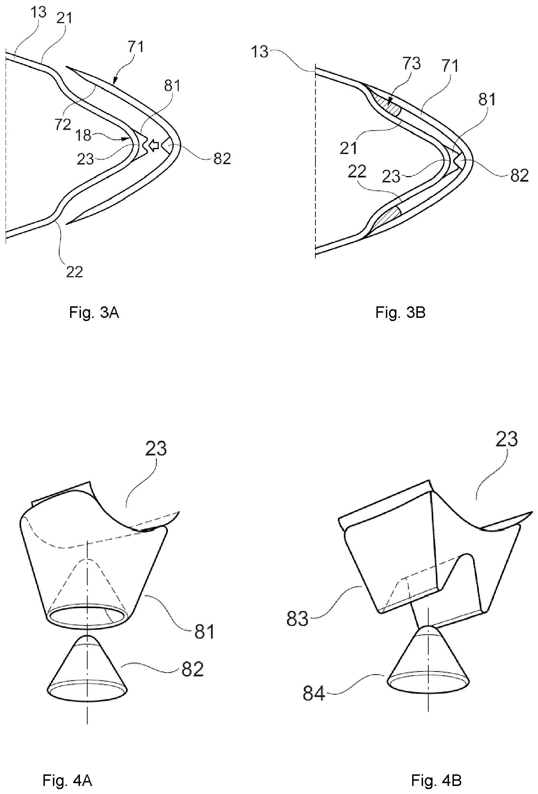

In an aspect of the present disclosure, a base 13 and an edge element 71 for a wind turbine blade section 40 are provided. An example of the base 13 and an example of the edge element 71 is illustrated in figure 3A.

In the illustrated example, the base 13 is made of fiber reinforced composite material and comprises a suction surface 21, a pressure surface 22 and at least one outer surface portion 23 between the suction surface and the pressure surface. The outer surface portion 23 of the base 13 comprises a first base positioning feature 81 configured to engage with a first edge positioning feature 82 on the edge element 71.

The first base positioning feature 81 may be a protrusion on an outside of the base, as shown in the examples of figure 3A. Specifically, the protrusion may be formed on the outer surface portion 23 between the suction surface 21 and the pressure surface 22. The outer surface portion 23 may connect the suction surface 21 to the pressure surface 22.

In some examples, the first base positioning feature may be integrally formed with the base in e.g. a molding process. In other examples, the first base positioning feature may be mechanically attached to the base with e.g. screws. In other examples, the first base positioning feature may be adhesively attached to the base.

Further, in the example of figure 3A, an edge element 71 configured to be coupled to a base of a wind turbine blade section is shown, the base having a suction surface 21, a pressure surface 22 and a first base positioning feature 81 as illustrated before.

The edge element 71 comprises an inner surface 72 including a first edge positioning feature 82 configured to engage with the first base positioning feature 81. The first edge positioning feature 82 may be a protrusion on the inner surface 72 of the edge element 71.

In some examples, the first edge positioning feature 82 may be integrally formed with the edge element. In other examples, the first edge positioning feature may be mechanically attached to the edge element with e.g. screws. In other examples, the first edge positioning feature may be adhesively attached to the edge element.

The edge element 71 is configured to be joined to the suction surface 21 and to the pressure surface 22 of the base. Specifically, the edge element 71 may be configured to be adhesively bonded to the suction surface 21 and the pressure surface 22.

In some examples, particularly in the example of figure 3, the edge element 71 may be a leading edge element, specifically a leading edge protector. A leading edge protector may herein be regarded as a protective element configured to protect a leading edge area(s) of the a wind turbine blade against erosion due to impact e.g. of rain, hail and particles on the blades. A wind turbine blade may comprise one or more of such leading edge protectors in examples of the present disclosure. In other examples, the edge element may be a trailing edge element. In some examples, a wind turbine blade or a wind turbine blade section may include both a trailing edge element and a leading edge element.

Figure 3B illustrates the base 13 mounted on the edge element 71 of the example of figure 3A. The first base positioning feature 81 and the first edge positioning feature 82 engage each other in that they contact each other. Further, the base 13 and edge element 71 are joined to each other, and specifically the edge element 71 may be adhesively bonded to the suction surface 21 and pressure surface 22 of the base.

In this specific example, even though the base positioning feature 81 and the edge positioning feature 82 engage each other, they are not fixed to each other. The transmission of loads from the edge element to the base rather occurs in this case through the connection at the suction and pressure surfaces 21, 22.

The edge positioning feature 82 and the base positioning feature 81 may be configured such that they substantially limit translational movement of the edge element 71 with respect to the base 13. In some examples, when the first edge positioning feature 81 engages with the first base positioning feature 82, the translational movement may be limited in three degrees of freedom.

The base and edge positioning features 81, 82 may have any complementary shape which allows them to engage with one another. In examples, the base and edge positioning features are configured to engage in a manner that limits relative movement between the edge and base elements of a wind turbine blade along at least one degree of freedom, and specifically may limit relative movement between the edge and base elements along at least one translational degree of freedom (optionally along two or three translational degrees of freedom). As may be seen in figures 3A and 3B, one of the base positioning feature 81 and the edge positioning feature 82 may be a receptacle, and the other one of the blade positioning feature and the blade positioning feature may be configured to be inserted into the receptacle. In this particular example, the base positioning feature 81 is a receptacle, i.e. a female connector portion and the edge positioning feature 82 is configured as a male connector portion to be inserted into the receptacle. In other examples, different male and female connector portions may be used, and the position of the male and female connector portions may be interchanged, i.e. one or more female connector portions may be arranged on the edge element, and one or more male connector portions on the base.

Engaging the positioning features may provide an accurate way of placing edge elements on a base for a wind turbine section in an intended position. Complementary shapes of the positioning features may allow insertion of one positioning feature into the other, restricting at least translational movements of the edge element with respect to the base and thus ensuring that the edge element is placed in a correct, intended location.

In some examples, one of the base positioning feature and the edge positioning feature may be shaped substantially as a cone and the other of the blade positioning feature and edge positioning feature may be shaped substantially as a cup. Figure 4A shows an example of a base positioning feature 81 being substantially shaped as a cup and an edge positioning feature 82 being substantially shaped as a cone. When the cone is introduced into the cup, translational movements may be avoided or limited, in three degrees of freedom, i.e. in this case, when the cone is introduced into the cup, movement of the edge element will be limited or avoided entirely in a longitudinal direction of the blade, in a chordwise direction of the blade, and also in a vertical direction (perpendicular to both the aforementioned directions). Movements along three perpendicular axes may thus be limited or avoided. The edge element may thus be stabilized to a certain extent during the process of attaching the edge element of the base.

In some examples, one of the base positioning feature and edge positioning feature may be shaped substantially as a cone and the other of the blade positioning feature and edge positioning feature may be shaped substantially as an elongated channel. Figure 4B shows an example of a base positioning feature 83 being substantially shaped as an elongated channel and an edge positioning feature 84 being substantially shaped as a cone. When the cone is introduced into the channel, translational movements may be avoided or at least limited in exactly two degrees of freedom. In this case, when the cone is introduced into the channel, movement of the edge element may be limited or avoided in the chordwise direction and in the vertical direction, while translation along the longitudinal direction of the blade may be allowed.

The positioning features may be made of a light material so that little extra weight is added on the base and therefore in the wind turbine blade section.

Without the positioning features, meticulous manipulation of an edge element is required to place the edge element on a base in the correct orientation since the movement of the edge element has six degrees of freedom. The positioning features limit translational movement of the edge element with respect to the base and therefore may facilitate the placement of the edge element in the base. Errors that may be made while assembling an edge element to a base may be reduced, enabling improved aerodynamic properties of the wind turbine blade section. In addition, the positioning features may help to prevent excessive forces e.g. due to compression of the outer surface portion of the base when attaching the edge element and the integrity of the wind turbine blade section, and the whole blade, may be maintained.

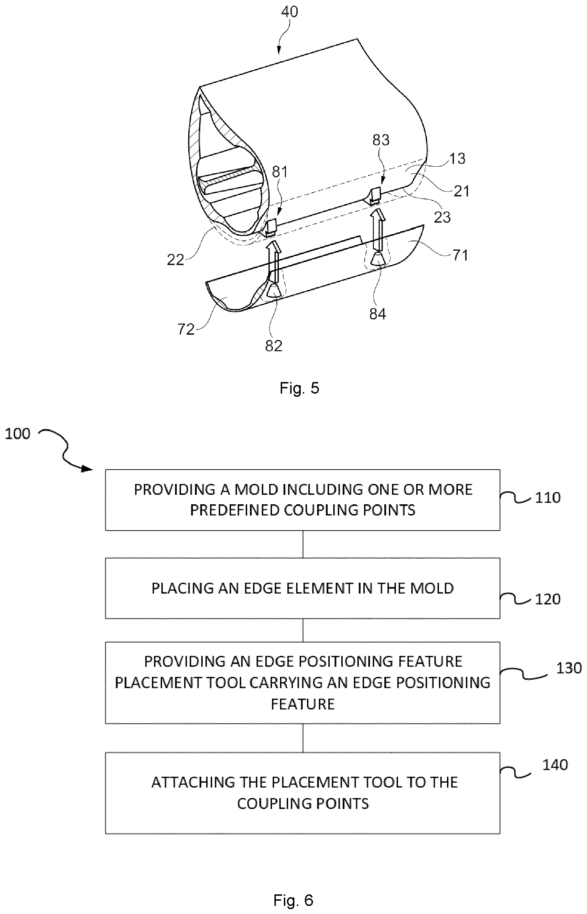

Figure 5 schematically illustrates an example of an edge element 71 positioned with respect to a base 13 comprised in a wind turbine blade section 40. The base 13 comprises a suction surface 21, a pressure surface 22 and at least one outer surface portion 23 between the suction surface and the pressure surface.

In this example the base 13 comprises a first 81 and a second base positioning feature 83. As previously explained for the first base positioning feature 81, the second base positioning feature 83 may be a protrusion on an outside of the base as illustrated. And similarly as before, the second base positioning feature 83 may be integrally formed with the base. In other examples, the second base positioning feature 83 may be mechanically attached to the base with e.g. screws. In other examples, the second base positioning feature 83 may be adhesively attached to the base.

In the example illustrated in figure 5, the edge element 71 also comprises a second edge positioning feature 84. The second edge positioning feature 84 may be a protrusion on the inner surface of the edge element. Similarly as for the first positioning feature 82 of the edge element illustrated before, the second edge positioning feature 84 may be integrally formed with the edge element. In other examples, the second edge positioning feature 84 may be mechanically attached to the edge element with e.g. screws. In other examples, the second edge positioning feature 84 may be adhesively attached to the edge element. The second edge positioning feature 84 may be configured to engage with the second base positioning feature 83 on the base.

A base and an edge element having two positioning features each may facilitate positioning the edge element with respect to the base, because they provide two reference points for positioning the edge element.

One of the second base positioning feature 83 and the second edge positioning feature 84 may be a receptacle, and the other one of the second base positioning feature 83 and the second edge positioning feature 84 may be configured to be inserted into the receptacle. In some examples, the second base positioning feature 83 and the second edge positioning feature 84 may be configured such that they limit translational movement of the edge element 71 with respect to the base 13 in exactly two degrees of freedom.

In some examples, the first 82 and second 84 edge positioning features and the first 81 and second 83 base positioning features may be substantially shaped as a cone and the other of the first 82 and second 84 edge positioning features and the first 81 and second 83 base positioning features may be substantially shaped as a cup and an elongated channel, as illustrated in the example of figure 4B.

Different shapes of positioning features in the base or in the edge element e.g. cup and elongated channel, may provide positioning features which may limit translational movement of the edge element in different degrees of freedom. In some examples, in a blade or edge element having a first and second positioning features, the positioning features of the base and the edge element which are closest to a tip of the wind turbine blade may allow less movement than the other positioning features. Specifically, the positioning features of the base and the edge element which are closest to the tip may be shaped such that they limit or avoid movement along more degrees of freedom, than other positioning features. Additionally, or alternatively, the positioning features of the base and edge element which are closest to the tip may be manufactured with smaller manufacturing tolerances so as to provide a more exact fit. The location close to the tip, where aerodynamic properties may be of increased significance may thus be precisely ensured.

In examples, a base for a wind turbine blade section, and an edge element configured for attachment of the blade may comprise first and second positioning features which may be different from each other. Specifically, first positioning features limiting translational movements in three directions (like the cone and cup illustrated before) may be combined with second positioning features limiting translational movements in exactly two directions (like the cone and channel illustrated before). If both of these are combined, engagement of the first and the second positioning features at the same time, will limit or avoid movement along all 6 degrees of freedom, i.e. translations along three mutually perpendicular axes, and rotations about these axes.

At the same time, such an arrangement may allow for reasonable manufacturing tolerances. Since the second positioning features allow movement along one, single direction, manufacturing tolerances may be absorbed and engagement of the positioning features is possible without potentially damaging components of the wind turbine blade.

In other examples, a base for a wind turbine blade section, and an edge element configured to be coupled to the base may comprise more than two positioning features. Providing more than two positioning features may facilitate positioning of the edge element with respect to the base because multiple reference points for positioning the edge element may be provided.

In specific examples, the base and edge elements may comprise two or more couplings of the type illustrated in figure 4B, and a single coupling of the type illustrated in figure 4A.

In some examples, the wind turbine blade section 40 may be one of a root section of a wind turbine blade, a tip section of a wind turbine blade or a whole wind turbine blade.

In examples, positioning features may be integrally formed with the edge element during e.g. a molding process. In other examples, the positioning features may be attached to the edge element after such a molding process. They may also be retrofitted in existing designs. In relation herewith, in another aspect of the present disclosure, a method 100 for mounting an edge positioning feature on an edge element for a wind turbine blade section is provided. Figure 6 represents a flow chart of the method 100.

The method comprises, at block 110, providing a mold including one or more predefined coupling points. The method comprises, at block 120, placing an edge element for a wind turbine blade section in the mold, an outer portion of the edge element being in contact with the mold. The edge element may be configured to be joined later to a base of a wind turbine blade section.

The method further comprises, at block 130, providing an edge positioning feature placement tool configured to carry an edge positioning feature. At block 140, the placement tool is attached to the mold at the predefined coupling points such that the edge positioning feature is brought into contact with the edge element.

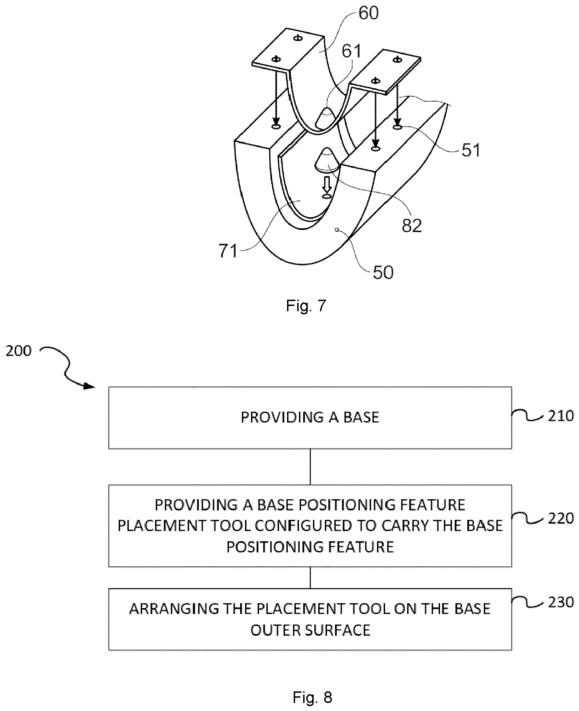

An example of the method of figure 6 is further illustrated in figure 7. Figure 7 schematically represents an example of an edge positioning feature 82 being mounted on an edge element 71 for a wind turbine blade section according to the method 100 of figure 6.

In figure 7, an edge element 71 is placed in a mold 50 and an edge positioning feature placement tool 60 is attached to the coupling points 51 of the mold 50. An arrow shows the location wherein the edge positioning feature 82 may be mounted on the edge element 71 once the edge positioning feature placement tool 60 is brought into contact with the inner side of the edge element 71. Although the edge positioning feature is illustrated outside of the edge positioning feature placement tool it may be understood that the edge positioning feature is carried in the cavity 61 of the tool.

Coupling points 51 may be regarded as any feature allowing engagement of another external component to the mold e.g. holes or protrusions. The coupling points may be configured to engage with the edge positioning feature placement tool 60. The coupling points may provide an easy way of receiving a placement tool and ensuring that the placement tool is correctly positioned with respect to the mold.

Alternatively or additionally, the mold 50 may comprise a specific shape which may ensure always placing an edge element in the same location. E.g., the mold may comprise recesses or protrusions at their edges such that the placement tool 60 can only be positioned in a single orientation and in a single position. This may ensure that no matter how many times the method is carried out, an edge positioning feature is always mounted on the same part of an edge element.

The edge positioning placement tool 60 may have fasteners or other features to couple to or attach with the coupling points 51 of the mold. The placement tool 60 may thus be properly positioned and aligned with the mold 50. The edge positioning feature placement tool 60 may comprise a cavity 61 configured to contain an edge positioning feature 82. In some examples, the edge positioning feature placement tool may be molded over a positioning feature.

Further, the positioning feature may comprise adhesive such that when the edge positioning feature is brought into contact with the edge element, the positioning feature can be fixedly attached to the edge element via the adhesive. After a predetermined period of time, i.e. when curing of the adhesive has taken place, the edge positioning feature placement tool may be withdrawn from the mold and an edge element comprising an edge positioning feature may be obtained.

An edge positioning feature may thus always be mounted in the same location of an edge element with the method 100. In examples, the edge positioning feature may be mounted on an edge element with a precision of at least ±0.5 mm. Achieving such a precision when mounting an edge positioning feature on an edge element may enable an accurate placement of the edge element with respect to a blade for a wind turbine section, and thus enable the resulting wind turbine blade (section) to have its intended aerodynamic properties.

In examples, positioning features may be integrally formed with the base of a section of a wind turbine blade during e.g. a molding process. In other examples, the positioning features may be attached to the base after such a molding process. They may also be retrofitted in existing designs. In relation herewith, in yet a further aspect of the present disclosure, a method 200 for mounting a base positioning feature on a base for a wind turbine blade section is provided. The base is made of fiber reinforced composite material, and comprises a suction surface, a pressure surface and at least one outer surface portion between the suction surface and the pressure surface. Figure 8 represents a flow chart of the method 200.

The method of figure 8 comprises, at block 210, providing the base for the wind turbine blade section. The method further comprises, at block 220, providing a base positioning feature placement tool configured to carry the base positioning feature. The method further comprises, at block 230, arranging the base positioning feature placement tool on the outer surface portion of the base. The base positioning feature placement tool may be arranged such that the base positioning feature is brought into contact with the base.

Examples of such method may facilitate mounting a base positioning feature on a base for a wind turbine blade.

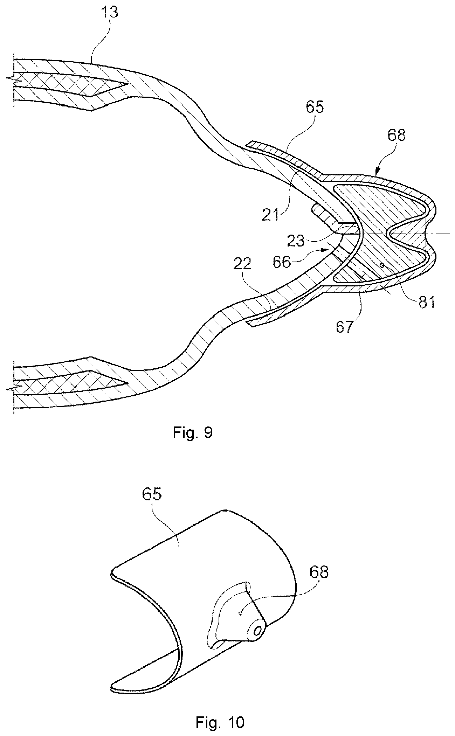

Figure 9 schematically represents an example of a base positioning feature 81 being mounted on a base 13 for a wind turbine blade section according to the example of method 200 of figure 8. More particularly, figure 9 shows a base positioning placement tool 65 carrying a base positioning feature 81 in contact with a base 13 for a wind turbine blade section. The outer surface portion 23 of the base comprises a first alignment feature 66 which is aligned with a second alignment feature 67 comprised in the base positioning feature.

The base positioning placement tool 65 carrying a base positioning feature 81 of figure 9 is shown in more detail in figure 10. The inner side of the base positioning placement tool 65 may be shaped such as to fit around the base. In examples, the base positioning placement tool may have been molded over a base positioning feature, providing a cavity shaped suitably for carrying a base positioning feature. The placement tool may comprise one or more handles or other features (not shown) which allow manipulation of the tool to mount a base positioning feature on a base.

The outer surface portion of the base 23 may comprise a first alignment feature 66 for aligning the base positioning feature placement tool 65 with the base 13. Further, the base positioning feature 81 may have a second alignment feature 67 which may be complementary to the first alignment feature 66.

The alignment features are herein illustrated as through-holes which allow visually checking proper alignment but other suitable alignment features may be used.

The first and second alignment features may ensure that the base positioning feature is mounted on the base at a specific location. In examples the base positioning feature may be mounted on a base with a precision of at least ±0.5 mm. As previously discussed, the base positioning feature may further be used for engaging with another positioning feature on an edge element. The location of the base positioning feature may directly influence the location of an edge element on the blade. Achieving such a precision when mounting a base positioning feature on a base may enable a future accurate placement of an edge element on the base for a wind turbine section, and thus optimal aerodynamic properties of the wind turbine blade section.

The base positioning feature placement tool 65 may comprise a cavity 68 containing the base positioning feature 81. The base positioning feature may have an adhesive such that when the base positioning feature is brought into contact with the base, the base positioning feature may be fixedly attached to the base via the adhesive.

In a further aspect of the present disclosure, a method 300 for assembling a wind turbine blade section is provided.

The method 300 comprises, at block 310, providing a base comprising a first base positioning feature. The base may be in accordance with any of the examples illustrated herein. The method further comprises, at block 320, providing an edge element comprising a first edge positioning feature configured to engage with the first base positioning feature. The edge element may be in accordance with any of the examples illustrated herein.

The method further comprises, at block 330, positioning the edge element with respect to the base by engaging the first edge positioning feature with the first base positioning feature. The method may then further comprise, at block 340, attaching the edge element to the base. Attachment may occur through bonding of the edge element at the pressure and suction surfaces of the base.

One of the first base positioning feature and the first edge positioning feature may be a receptacle and the other one of the base positioning feature and the edge positioning feature may be configured to be inserted into the receptacle as illustrated hereinbefore.

The first base positioning feature may be on an outer surface portion of the base, wherein the outer surface portion connects a suction surface with a pressure surface of the base. The base positioning feature may be attached to the base with an adhesive. The base positioning feature may be mounted on the base according to the method 200. In other examples, the base positioning feature may be integrally formed with the base in a molding process.

Further, the first edge positioning feature may be on an inside of the edge element. The edge element may be attached to the base with an adhesive. The edge positioning feature may be mounted on the edge element according to the method 100. In other examples, the edge positioning feature may be integrally formed with the edge element in a molding process.

The wind turbine blade section may be one of a root section of a wind turbine blade, a tip section of a wind turbine blade, a whole wind turbine blade.

An example of the method 300 was herein illustrated with reference to figure 5.

With the method 300, complexity of the assembling operation may be reduced and the joining of an edge element to a base for a wind turbine blade may be more efficient. In examples, an edge element may be attached to a base with a precision of ±1.0 mm. Assembling with the positioning features may allow positioning the edge element in the wanted position and also may help protect the wind turbine blade section by enabling control of the amount of pressure exerted to the blade when positioning the edge element with respect to the base.

Although not further illustrated in any of the figures, it should be clear that edge elements may also be trailing edge elements, attached at a trailing edge of the base, rather than at a leading edge of the base which has been illustrated in the figures.

For reasons of completeness, various aspects of the present disclosure are set out in the following numbered clauses:
Clause 1. A base (13) for a wind turbine blade section (40) configured to be coupled to an edge element (71), wherein
   the base (13) is made of fiber reinforced composite material, and comprises:
   a suction surface (21);
   a pressure surface (22);
   at least one outer surface portion (23) which is between the suction surface and the pressure surface, wherein
   the outer surface portion (23) comprises a first base positioning feature (81), and wherein the first base positioning feature (81) is configured to engage with a first edge positioning feature (82) on the edge element.
Clause 2. The base (13) according to clause 1, wherein the first base positioning feature (81) is a protrusion on an outside of the base.
Clause 3. The base (13) according to clauses 1 or 2, wherein the outer surface portion (23) is between the suction surface (21) and the pressure surface (22) near a trailing edge, and the edge element is a trailing edge element.
Clause 4. The base (13) according to clauses 1 or 2, wherein the outer surface portion (23) is between the suction surface (21) and the pressure surface (22) near a leading edge and the edge element is a leading edge element.
Clause 5. The base (13) according to any of clauses 1 - 4, wherein one of the first base positioning feature (81) and the first edge positioning feature (82) is a receptacle, and the other one of the first base positioning feature (81) and the first edge positioning feature (82) is configured to be inserted into the receptacle.
Clause 6. The base (13) according to clause 5, wherein the first base positioning feature (81) is a receptacle, and the first edge positioning feature (82) is configured to be inserted into the receptacle.
Clause 7. The base (13) according to clause 6, wherein the first base positioning feature (81) is shaped substantially as a cup, and wherein the first edge positioning feature (82) is substantially shaped as a cone.
Clause 8. The base (13) according to clause 6, wherein the first base positioning feature (83) is shaped substantially as an elongated channel, and the first edge positioning feature (84) is shaped substantially as a cone.
Clause 9. The base (13) according to any of clauses 1 - 8, wherein the base comprises a second base positioning feature (83) configured to engage with a second edge positioning feature (84) on the edge element.
Clause 10. The base (13) according to clause 9, wherein the second base positioning feature (83) is substantially shaped as an elongated channel, and the second edge positioning feature (84) is substantially shaped as a cone.
Clause 11. The base (13) according to any of clauses 1 - 10, wherein the wind turbine blade section (40) corresponds to a root section of a wind turbine blade, to a tip section of a wind turbine blade, or to a whole wind turbine blade.
Clause 12. The base (13) according to any of clauses 1 - 11, wherein the first base positioning feature (81) and/or the second base positioning feature (83) is integrally formed with the base in a molding process.
Clause 13. The base (13) according to any of clauses 1 - 11, wherein the first base positioning feature (81) and/or the first edge positioning feature (82) is mechanically attached, or adhesively attached to the base, or both.
Clause 14. An edge element (71) configured to be coupled to a base (13) of a wind turbine blade section (40), the base having a suction surface (21), a pressure surface (22) and a first base positioning feature (81), wherein
   the edge element (71) comprises an inner surface (72) including a first edge positioning feature (82) configured to engage with the first base positioning feature (81), and wherein
   the edge element (71) is configured to be joined to the suction surface (21) and/or to the pressure surface (22) of the base.
Clause 15. The edge element (71) according to clause 14, wherein the first edge positioning feature (82) is a protrusion on the inner surface (72) of the edge element (71).
Clause 16. The edge element (71) according to clause 14 or 15, wherein one of the first base positioning feature (81) and the first edge positioning feature (82) is a receptacle, and the other one of the first base positioning feature (81) and the first edge positioning feature (82) is configured to be inserted into the receptacle.
Clause 17. The edge element (71) according to clause 16, wherein the first base positioning feature (81) is a receptacle, and the first edge positioning feature (82) is configured to be inserted into the receptacle.
Clause 18. The edge element (71) according to clause 17, wherein the first edge positioning feature (82) is shaped substantially as a cone.
Clause 19. The edge element (71) according to any of clauses 14 - 18, comprising a second edge positioning feature (84) configured to engage with a second base positioning feature (83) on the base.
Clause 20. The edge element (71) according to clause 19, wherein the second edge positioning feature (84) is configured to be inserted into the second base positioning feature (83).
Clause 21. The edge element (71) according to clause 20, wherein the second edge positioning feature (84) is shaped substantially as a cone.
Clause 22. The edge element (71) according to any of clauses 14 - 21, wherein the first edge positioning feature (82) and/or the second edge positioning feature (84) are integrally formed with the edge element (71) in a molding process.
Clause 23. The edge element (71) according to any of clauses 14 - 21, wherein the first edge positioning feature (82) and/or the second edge positioning feature (84) are mechanically attached, or adhesively attached to the edge element (71), or both.
Clause 24. The edge element (71) according to any of clauses 14 - 23, wherein the edge element is a trailing edge element.
Clause 25. The edge element (71) according to any of clauses 14 - 23, wherein the edge element is a leading edge element, specifically a leading edge protector.
Clause 26. A wind turbine blade section (40) comprising:
   a base (13) and an edge element (71), wherein
   the base (13) is made of fiber reinforced composite material, and comprises a suction surface (21), a pressure surface (22), and at least one outer surface portion (23) which is between the suction surface and the pressure surface, wherein
   the outer surface portion (23) comprises a first base positioning feature (81), and wherein
   the first edge positioning feature (82) is configured to engage with the first base positioning feature (81), and wherein
   the edge element (71) is configured to be joined to the suction surface (21) and/or to the pressure surface (22) of the base (13).
Clause 27. The wind turbine blade section (40) according to clause 26, wherein the first base positioning feature (81) is a protrusion on an outside of the base and the first edge positioning feature (82) is a protrusion on the inner surface (72) of the edge element (71).
Clause 28. The wind turbine blade section (40) according to clause 26 or 27, wherein the first base positioning feature (81) and the first edge positioning feature (82) are configured such that translational movement of the edge element (71) with respect to the base (13) is limited in three degrees of freedom when the first edge positioning feature (82) engages with the first base positioning feature (81).
Clause 29. The wind turbine blade section (40) according to any of clauses 26 - 28, wherein one of the first base positioning feature (81) and the first edge positioning feature (82) is a receptacle, and the other one of the first blade positioning feature (81) and the first blade positioning feature (82) is configured to be inserted into the receptacle.
Clause 30. The wind turbine blade section (40) according to clause 29, wherein the first base positioning feature (81) is a receptacle, and the first edge positioning feature is configured to be inserted into the receptacle.
Clause 31. The wind turbine blade section (40) according to claim 30, the first base positioning feature (81) is shaped substantially as a cup, and wherein the first edge positioning feature (82) is substantially shaped as a cone.
Clause 32. The wind turbine blade section (40) according to any of clauses 26 - 30, wherein the base comprises a second base positioning feature (83) and the edge element comprises a second edge positioning feature (84), and wherein the second base positioning feature (83) is configured to engage with a second edge positioning feature (84).
Clause 33. The wind turbine blade section (40) according to clause 32, wherein the second base positioning feature (83) and the second edge positioning feature (84) are configured such that translational movement of the edge element (71) with respect to the base (13) is limited in exactly two degrees of freedom when the second edge positioning feature (83) engages with the second base positioning feature (84).
Clause 34. The wind turbine blade section according to clause 32 or 33, wherein one of the second base positioning feature (83) and the second edge positioning feature (84) is configured as a receptacle, and the other one of the second base positioning feature (83) and the second edge positioning feature (84) is configured to be inserted into the receptacle.
Clause 35. The wind turbine blade section (40) according to clause 34, wherein the second base positioning feature (83) is substantially shaped as an elongated channel, and the second edge positioning feature (84) is substantially shaped as a cone.
Clause 36. The wind turbine blade section (40) according to any of clauses 26 - 35, wherein the wind turbine blade section corresponds to a root section of a wind turbine blade, to a tip section of a wind turbine blade, or to a whole wind turbine blade.
Clause 37. The wind turbine blade section (40) according to any of clauses 26 - 36, wherein the edge element is a trailing edge element.
Clause 38. The wind turbine blade section (40) according to any of clauses 26 - 36, wherein the edge element is a leading edge element.
Clause 39. A method (100) for mounting an edge positioning feature (82) on an edge element (71) for a wind turbine blade section, the method comprising:
   providing a mold (50) including one or more predefined coupling points (51);
   placing an edge element (71) for a wind turbine blade section in the mold (50), an outer portion of the edge element being in contact with the mold;
   providing an edge positioning feature placement tool (60) configured to carry an edge positioning feature (82) and attaching the placement tool (60) to the mold (50) at the predefined coupling points (51) such that the edge positioning feature (82) is brought into contact with the edge element (71).
Clause 40. The method (100) according to clause 39, wherein the edge positioning feature (82) comprises adhesive and wherein when the edge positioning feature (82) is brought into contact with the edge element (71), the positioning feature is fixedly attached to the edge element (71) via the adhesive.
Clause 41. The method (100) according to clause 39 or 40, wherein the edge positioning feature placement tool (60) comprises a cavity (61) configured to contain the edge positioning feature (82).
Clause 42. A method (200) for mounting a base positioning feature (81) on a base (13) for a wind turbine blade section (40), wherein the base is made of fiber reinforced composite material, and comprises a suction surface (21), a pressure surface (22) and at least one outer surface portion (23) which is between the suction surface and the pressure surface, and the method comprising:
   providing the base (13) for the wind turbine blade section;
   providing a base positioning feature placement tool (65) configured to carry the base positioning feature (81); and
   arranging the base positioning feature placement tool (65) on the outer surface portion (23) of the base such that the base positioning feature (81) is brought into contact with the base (13).
Clause 43. The method (200) for mounting a base positioning feature on a base for a wind turbine section according to clause 42, wherein the outer surface portion of the base comprises a first alignment feature (66) for aligning the base positioning feature placement tool (65) with the base.
Clause 44. The method (200) for mounting a base positioning feature on a base for a wind turbine section according to clause 43, wherein the base positioning feature has a second alignment feature (67) which is complementary to the first alignment feature (66).
Clause 45. The method (200) for mounting a base positioning feature on a base for a wind turbine section according to any of clauses 42 - 44, wherein the base positioning feature placement tool (65) comprises a cavity (68) configured to contain the base positioning feature (81).
Clause 46. The method (200) for mounting a base positioning feature on a base for a wind turbine section according to any of clauses 42 - 45, wherein the base positioning feature (81) has an adhesive and wherein the base positioning feature is fixedly attached to the base (13) via the adhesive.
Clause 47. A method (300) for assembling a wind turbine blade section, comprising:
   providing a base (13) according to any of clauses 1 - 13;
   providing an edge element (71) according to any of clauses 14 - 25;
   positioning the edge element (71) with respect to the base (13) by engaging the first edge positioning feature (82) with the first base positioning feature (81); and
   attaching the edge element (71) to the base (13).
Clause 48. The method (300) for assembling a wind turbine blade section according to clause 47, wherein the edge element (71) is attached to the base (13) with an adhesive (73).

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A wind turbine blade section (40) comprising:
a base (13) and an edge element (71), wherein
the base (13) is made of fiber reinforced composite material, and comprises a suction surface (21), a pressure surface (22), and at least one outer surface portion (23) between the suction surface and the pressure surface, wherein
the outer surface portion (23) comprises a first base positioning feature (81), and wherein
the edge element (71) comprises an inner surface (72) including a first edge positioning feature (82), and wherein
the first edge positioning feature (82) is configured to engage with the first base positioning feature (81), and wherein
the edge element (71) is configured to be joined to the suction surface (21) and/or to the pressure surface (22) of the base (13).

2. The wind turbine blade section (40) according to claim 1, wherein the first base positioning feature (81) is a protrusion on an outside of the base and the first edge positioning feature (82) is a protrusion on the inner surface (72) of the edge element (71).

3. The wind turbine blade section (40) according to claim 1 or 2, wherein the first base positioning feature (81) and the first edge positioning feature (82) are configured such that translational movement of the edge element (71) with respect to the base (13) is limited in three degrees of freedom when the first edge positioning feature (82) engages with the first base positioning feature (81).

4. The wind turbine blade section (40) according to any of 1 - 3, wherein one of the first base positioning feature (81) and the first edge positioning feature (82) is a receptacle, and the other one of the first base positioning feature (81) and the first edge positioning feature (82) is configured to be inserted into the receptacle.

5. The wind turbine blade section (40) according to any of claims 1 - 4, wherein the base comprises a second base positioning feature (83) and the edge element comprises a second edge positioning feature (84), and wherein the second base positioning feature (83) is configured to engage with a second edge positioning feature (84).

6. The wind turbine blade section (40) according to claim 5, wherein the second base positioning feature (83) and the second edge positioning feature (84) are configured such that translational movement of the edge element (71) with respect to the base (13) is limited in exactly two degrees of freedom when the second edge positioning feature (83) engages with the second base positioning feature (84).

7. The wind turbine blade section (40) according to claim 5 or 6, wherein one of the second base positioning feature (83) and the second edge positioning feature (84) is configured as a receptacle, and the other one of the second base positioning feature (83) and the second edge positioning feature (84) is configured to be inserted into the receptacle.

8. The wind turbine blade section (40) according to claim 7, wherein the second base positioning feature is substantially shaped as an elongated channel, and the second edge positioning feature is substantially shaped as a cone.

9. The wind turbine blade section (40) according to any of claims 1 - 8, wherein the wind turbine blade section corresponds to a root section of a wind turbine blade, to a tip section of a wind turbine blade, or to a whole wind turbine blade.

10. A base (13) for a wind turbine blade section (40) configured to be coupled to an edge element (71), wherein
the base (13) is made of fiber reinforced composite material, and comprises:
a suction surface (21);
a pressure surface (22);
at least one outer surface portion (23) between the suction surface (21) and the pressure surface (22), wherein
the outer surface portion (23) comprises a first base positioning feature (81), and wherein the first base positioning feature (81) is configured to engage with a first edge positioning feature (82) on the edge element.

11. An edge element (71) configured to be coupled to a base (13) of a wind turbine blade section, the base having a suction surface (21), a pressure surface (22) and a first base positioning feature (81), wherein
the edge element (71) comprises an inner surface (72) including a first edge positioning feature (82) configured to engage with the first base positioning feature (81), and wherein
the edge element (71) is configured to be joined to the suction surface (21) and/or to the pressure surface (22) of the base.

12. The edge element (71) according to claim 11, wherein the first edge positioning feature (82) is a protrusion on the inner surface (72) of the edge element.

13. The edge element (71) according to claim 11 or 12, wherein the edge element is a leading edge element, specifically a leading edge protector.

14. A method (100) for mounting an edge positioning feature (82) on an edge element (71) for a wind turbine blade section, the method comprising:
providing a mold (50) including one or more predefined coupling points (51);
placing an edge element (71) for a wind turbine blade section in the mold (50), an outer portion of the edge element being in contact with the mold;
providing an edge positioning feature placement tool (60) configured to carry an edge positioning feature (82) and attaching the placement tool (60) to the mold (50) at the predefined coupling points (51) such that the edge positioning feature (82) is brought into contact with the edge element (71).

15. A method (300) for assembling a wind turbine blade section, comprising:
providing a base (13) according to claim 10;
providing an edge element (71) according to any of claims 11 - 13;
positioning the edge element (71) with respect to the base (13) by engaging the first edge positioning feature (82) with the first blade positioning feature (81); and
attaching the edge element (71) to the base (13).
